# EUROPÄISCHE PATENTSCHRIFT

(11) **EP 2 091 132 B1**
(45) Veröffentlichungstag und Bekanntmachung des Hinweises auf die Patenterteilung: **03.04.2019**
(21) Anmeldenummer: 09001372.3
(22) Anmeldetag: 02.02.2009
(51) Int. Cl.: H02K 3/28, H02K 3/52

(54) **Elektronisch kommutierter Motor**
Electronically commutated motor
Moteur à commutation électronique

(30) Priorität: 12.02.2008 DE 102008009845
(43) Veröffentlichungstag der Anmeldung: 19.08.2009
(73) Patentinhaber: ebm-papst St. Georgen GmbH & Co. KG, 78112 St. Georgen (DE)
(72) Erfinder: Ghodsi-Khameneh, Hassan, 78112 St. Georgen (DE); Hahn, Alexander, 78253 Eigeltingen-Heudorf (DE); Weisser, Reimund, 78126 Königsfeld-Erdmannsweiler (DE)
(74) Vertreter: Staeger & Sperling Partnerschaftsgesellschaft mbB

(56) Entgegenhaltungen:
- EP-A1- 1 526 628
- EP-A2- 1 677 404
- WO-A1-2006/120054
- DE-A1- 10 318 816
- US-A1- 2003 094 879

## Beschreibung

Die Erfindung betrifft einen elektronisch kommutierten Motor.

Bei manchen Anwendungen sind elektronisch kommutierte Motoren notwendig, die innerhalb sehr kurzer Zeit starten und folglich so ausgelegt sind, dass sie ein hohes Drehmoment ermöglichen und einen niedrigen Innenwiderstand haben.

Die EP 1 677 404 A2 zeigt einen Motor mit einem Stator, einem drehbar gelagerten Rotor und einer Endstufe. Der Stator hat 12 ausgeprägte Statorpole, denen Statorspulen zugeordnet sind. Die Statorspulen sind über Verbindungsringe miteinander verschaltet, die als stehende Stromschienen ausgebildet und in einem Halter angeordnet sind.

Die EP 1 526 628 A1, die US 2003/0094879 A1 und die DE 103 18 816 A1 zeigen Statoren mit Verschaltteilen, die jeweils konzentrisch angeordnet sind.

Die WO 2006/120054A1 zeigt einen Elektromotor mit einer Statoreinheit, die Verschaltelemente mit einer Mehrzahl unterschiedlicher Formen aufwesit.

Es ist deshalb eine Aufgabe der Erfindung, einen neuen elektronisch kommutierten Motor bereit zu stellen.

Nach der Erfindung wird diese Aufgabe gelöst durch den Gegenstand des Patentanspruchs 1. Ein solcher Motor hat bei kompaktem Aufbau ein hohes Drehmoment und ist einfach und preiswert herzustellen.

Weitere Einzelheiten und vorteilhafte Weiterbildungen der Erfindung ergeben sich aus den im Folgenden beschriebenen und in der Zeichnung dargestellten, in keiner Weise als Einschränkung der Erfindung zu verstehenden Ausführungsbeispielen, sowie aus den Unteransprüchen. Es zeigt:
- Fig. 1: die Darstellung eines bewickelten Statorblechpakets, das an einer Stirnseite mit speziellen Stromschienen versehen ist,
- Fig. 2: eine Draufsicht von oben auf die Anordnung nach Fig. 1,
- Fig. 3: ein Wickelschema für die in Fig. 1 dargestellte Statorwicklung,
- Fig. 4: eine Darstellung, welche als Beispiel zeigt, wie die Wicklungsstränge der Fig. 3 zu einer Mehrfachparallel-Dreieckswicklung verschaltet sind,
- Fig. 5: eine der beim Statorblechpaket der Fig. 1 verwendeten Stromschienen, in perspektivischer Darstellung,
- Fig. 6: eine Darstellung entsprechend dem oberen Teil der Fig. 1, aber als Explosionsdarstellung,
- Fig. 7: eine Draufsicht von oben auf das obere Teil der Fig. 1, aber im unbewickelten Zustand,
- Fig. 8: einen Schnitt, gesehen längs der Linie VIII-VIII der Fig. 7,
- Fig. 9: eine raumbildliche Darstellung von Einzelheiten eines Endrings,
- Fig. 10: eine raumbildliche Darstellung der elektrischen Verbindung eines Powersteckers mit dem Endring,
- Fig. 11: die Darstellung eines Motors mit seitlich montiertem Powerstecker, in einer geschnittenen Darstellung,
- Fig. 12: eine vergrößerte Schnittdarstellung eines Hakens mit einem darin eingehängten Wicklungsdraht, und
- Fig. 13: den Vorgang der Widerstandsschweißung mittels einer Schweißzange.

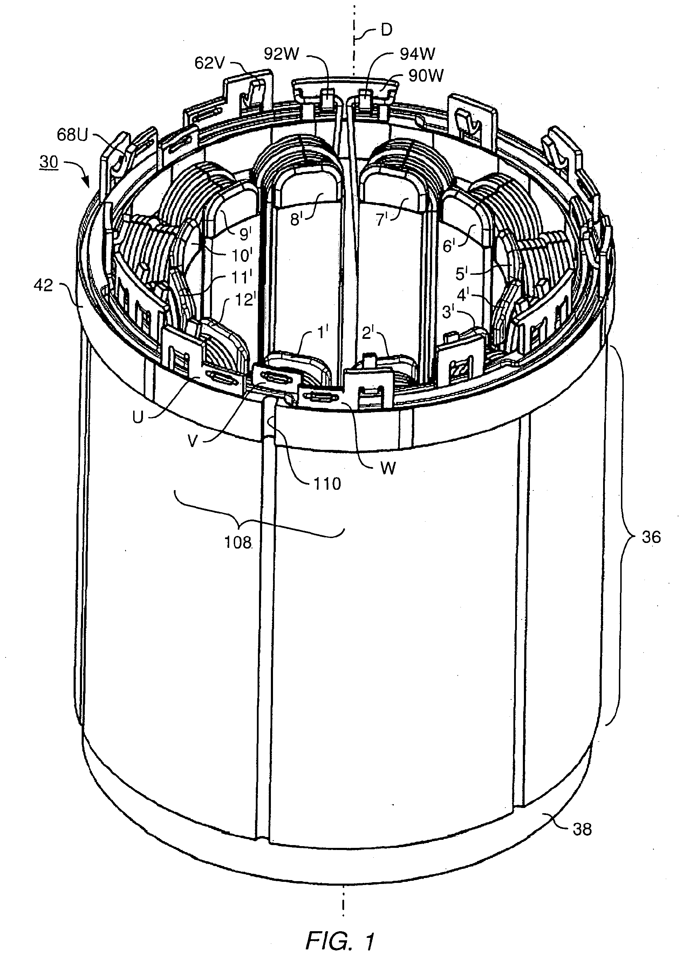

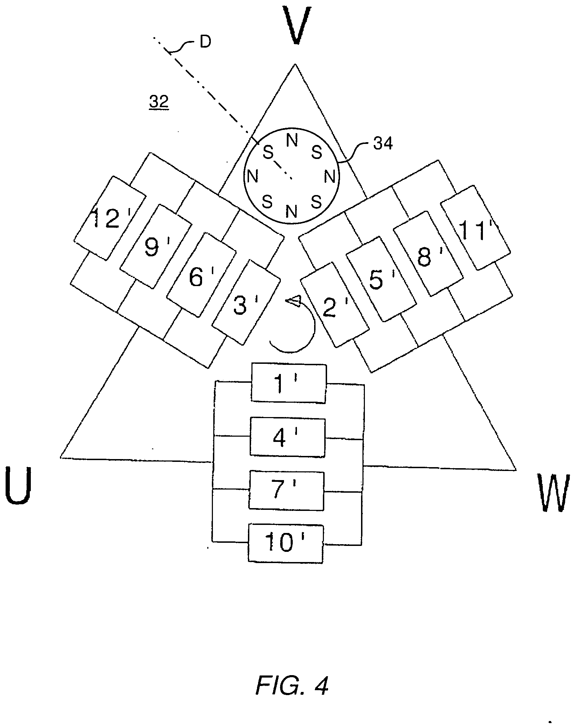

**Fig. 1** zeigt den Stator 30 eines dreiphasigen Motors 32 (Fig. 4), der hier als Beispiel einen permanentmagnetischen Innenrotor 34 hat, welcher in Fig. 4 nur ganz schematisch angedeutet ist und naturgemäß je nach Bauweise des Motors 32 verschiedene Bauformen und Polzahlen haben kann, wie das dem Fachmann für elektrische Maschinen bekannt ist. Dargestellt ist ein achtpoliger Rotor. Das Blechpaket 36 hat zwölf Nuten 1 bis 12, die in der üblichen Weise isoliert sind, z.B. mittels einer (nicht dargestellten) Kunststoffbeschichtung. Diese definieren zwölf ausgeprägte Pole. Jeder Pol ist mit einer Spule bewickelt, und diese Spulen sind mit 1' bis 12' bezeichnet.

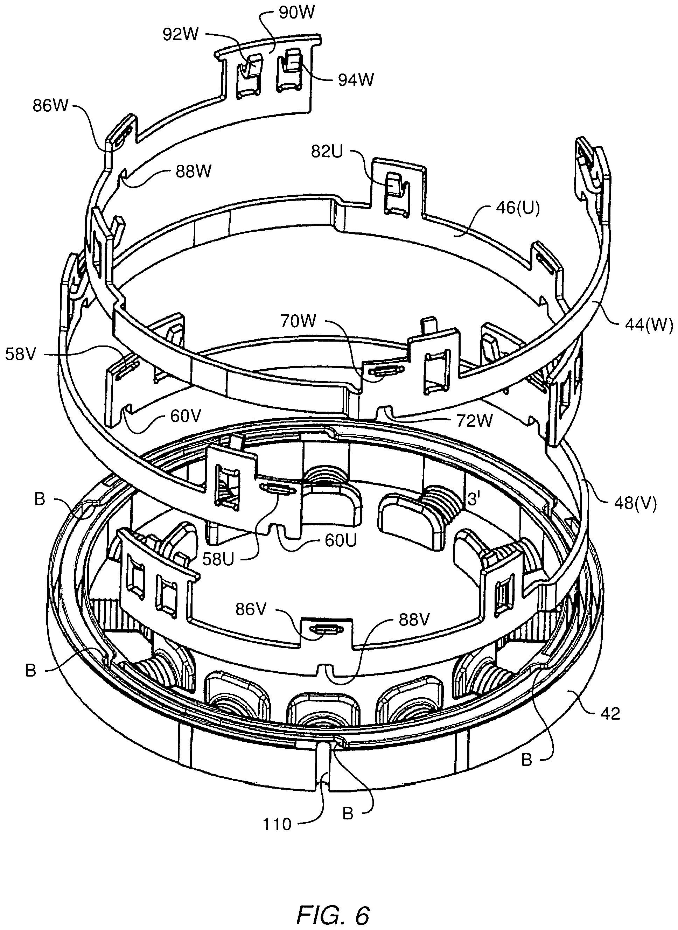

Der Stator 30 hat in der üblichen Weise ein Blechpaket (lamination stack) 36, an dessen in Fig. 1 unterem Ende ein isolierender Ring 38 montiert ist, der einen Teil des Wickelkörpers für die Statorwicklung bildet. Dieser Ring 38 wird gelegentlich auch als "Endscheibe" bezeichnet und trägt bei dieser Ausführungsform keine elektrischen Verbindungselemente, sondern dient nur als Teil des Spulenkörpers und als Isolator für die Wicklung, kann aber die gleiche Form haben, wie sie in Fig. 6, unten, dargestellt ist, jedoch ohne die drei Stromschienen, die im oberen Teil von Fig. 6 dargestellt sind und die beim unteren Ring 38 nicht benötigt werden.

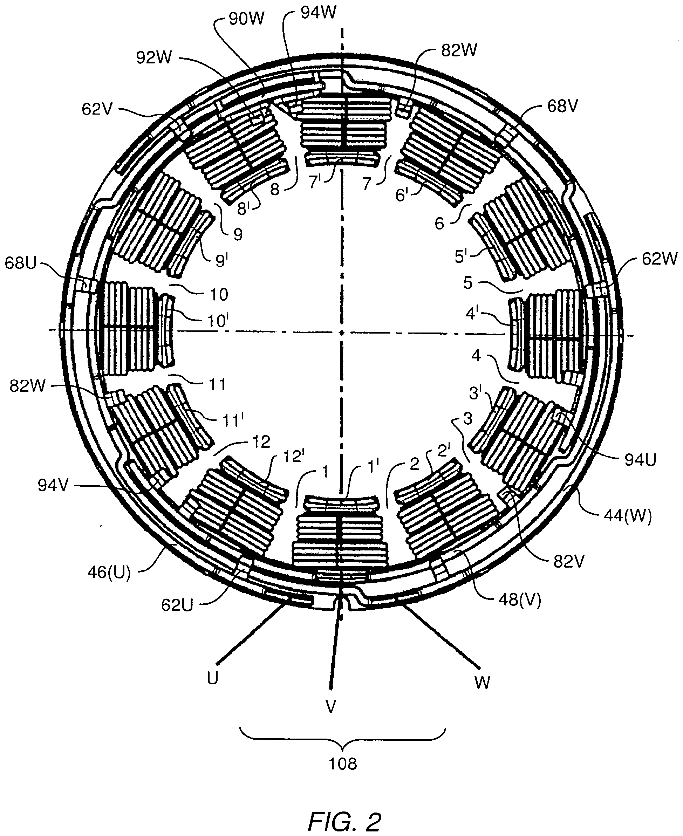

Am oberen Ende des Statorblechpakets 36 ist gemäß Fig. 1, Fig. 6, und Fig. 7 ein isolierender Ring 42 angeordnet, der ebenfalls als Ringscheibe bezeichnet werden kann, und der ebenfalls die Funktion hat, als Teil des Spulenkörpers für die Wicklung, und als Isolator für diese, zu dienen. Dieser obere Ring 42 trägt bei diesem Ausführungsbeispiel drei hochkant stehende Stromschienen 44, 46, 48, die identisch sein können, aber gegeneinander in der Weise um 120° mech. winkelversetzt sind, wie das aus den Fig. 2, 6 und 7 hervorgeht.

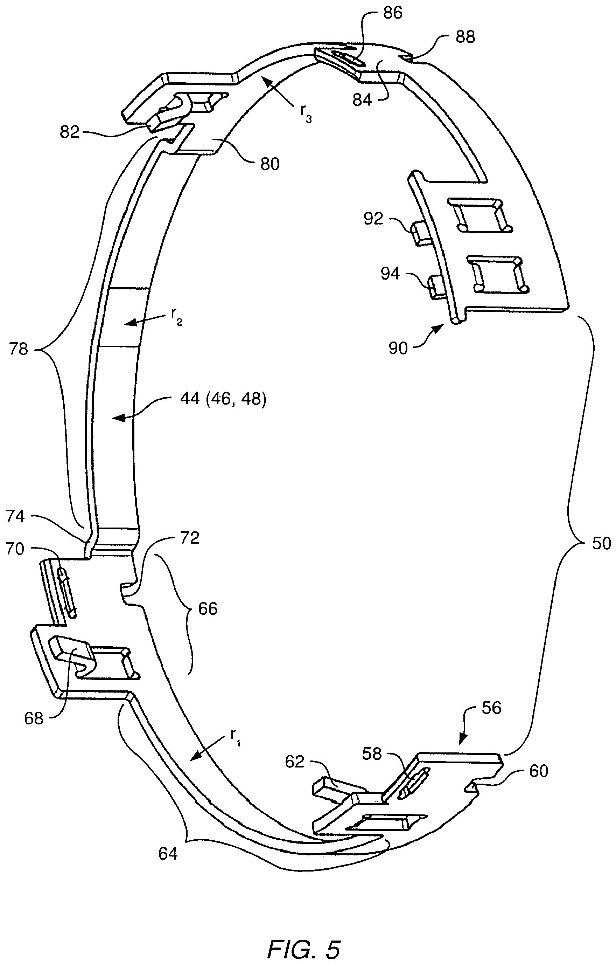

**Fig. 5** zeigt die Stromschiene 44, die gewöhnlich - aus praktischen Gründen - mit den Stromschienen 46 und 48 identisch ausgeführt wird, weshalb die einzelnen Stromschienen redundante Teile enthalten, die naturgemäß auch weggelassen werden könnten, was aber in den meisten Fällen die Kosten erhöhen würde. Bei den Stromschienen 44, 46, 48 handelt es sich um Teile, die für das Auge einfach aussehen, aber hinsichtlich ihrer Funktionen beruhen sie auf einer langen und schwierigen Entwicklung und auf zahlreichen erfinderischen Schritten, da sie sehr unterschiedliche Funktionen optimal erfüllen müssen.

Jede Stromschiene 44, 46, 48 hat beim Ausführungsbeispiel etwa die Form eines Ringsegments und erstreckt sich bei diesem Beispiel über etwa 280 bis etwa 300° mech., bevorzugt etwa 295° mech., d.h. jeder Ring hat ein fehlendes Stück 50, was es ermöglicht, die drei Ringe 44, 46, 48 geschickt ineinander zu verschachteln, gegen Verdrehung relativ zueinander zu sichern, den Wicklungsdraht an seinen Enden in einfacher Weise vorläufig zu sichern, und eine falsche Montage zu verhindern.

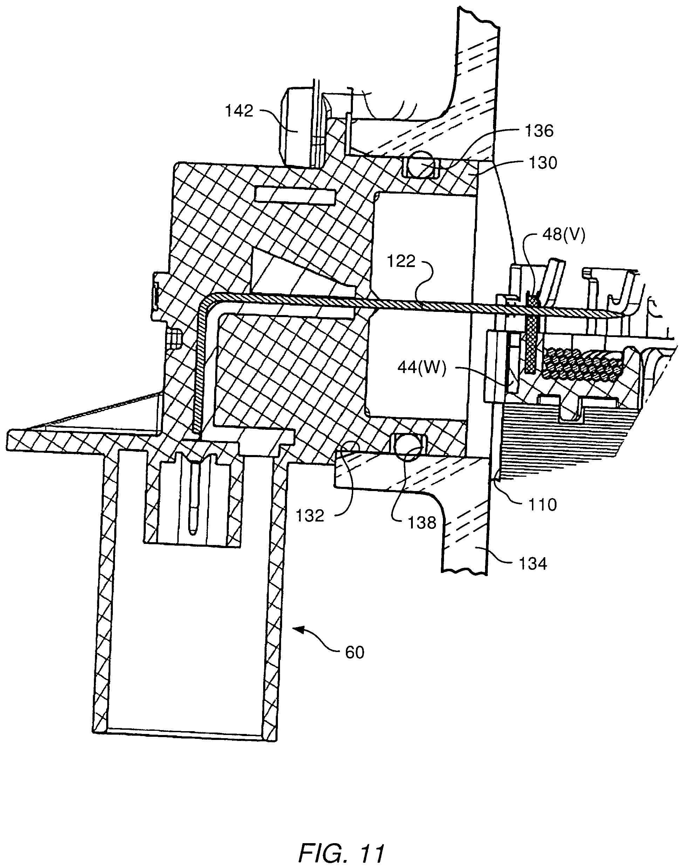

Wie Fig. 5 zeigt, hat die Stromschiene 44 an ihrem in Fig. 5 unteren Abschnitt 56 eine längliche Ausnehmung 58, die zur Verbindung mit einem Stecker 60 dient, der in Fig. 11 dargestellt ist und dazu dient, den Motor 32 mit elektrischer Energie zu versorgen.

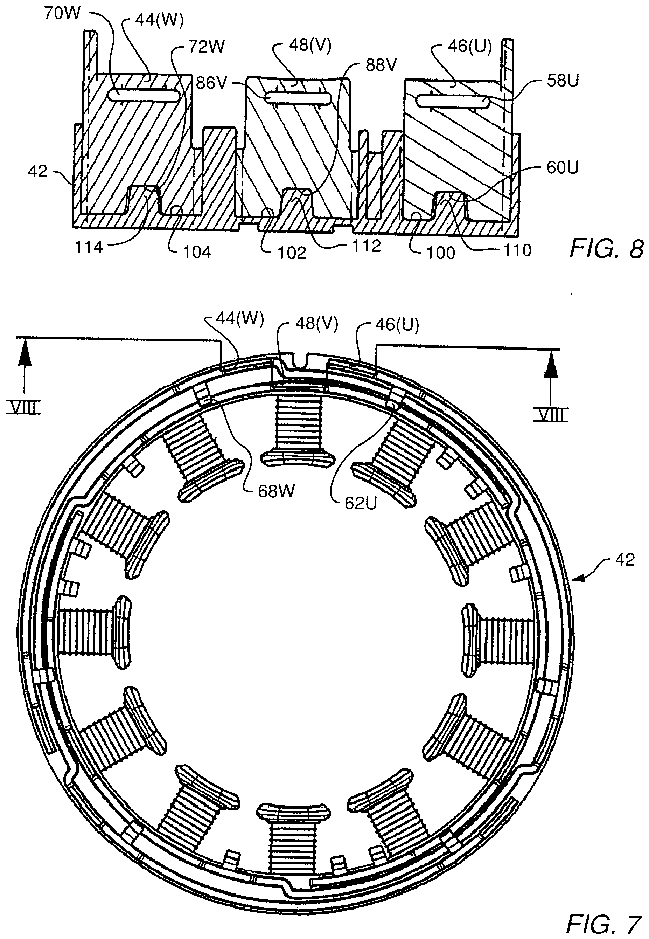

Dieser Ausnehmung 58 etwa gegenüber liegend befindet sich eine Einkerbung 60, die gemäß Fig. 8 zum Eingriff mit einem Vorsprung 110 des Rings 42 dient, wodurch letzterer daran gehindert wird, sich an dieser Stelle relativ zur betreffenden Stromschiene zu verdrehen, d.h. die Nut 60U der Stromschiene 46 (U) und der Vorsprung 114 dienen dazu, die Stromschiene 46 (U) im Bereich des zugeordneten Vorsprungs 110 weitgehend zu immobilisieren, wie das für eine maschinelle Fertigung vorteilhaft ist.

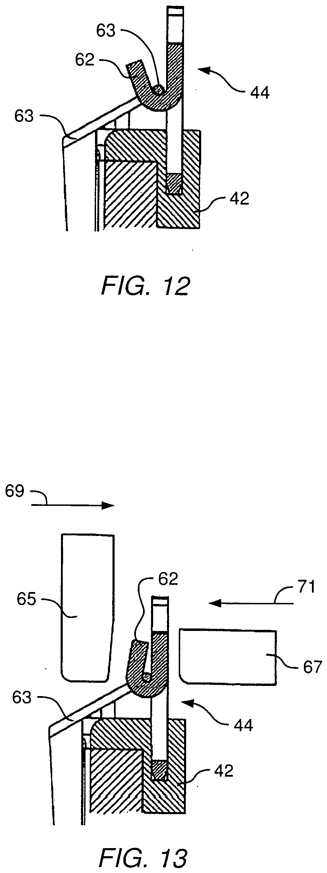

Im Uhrzeigersinn gesehen folgt auf die Ausnehmung 58 ein Haken 62, der aus der Stromschiene 44 herausgestanzt und in der dargestellten Weise nach innen gebogen ist. An diesem Haken 62 wird beim Wickeln ein Wicklungsdraht 63 zunächst eingehängt, vgl. **Fig. 12****,** und anschließend durch Widerstandsschweißen mit dem Haken 62 verschweißt, was mit einer automatischen Vorrichtung geschehen kann.

**Fig. 13** zeigt eine Widerstandsschweißung, bei der die Leitung 63 mittels einer Schweißzange, die in Richtung von zwei Pfeilen 69, 71 geschlossen wird, mit dem Haken 62 verschweißt wird. Hierzu werden die beiden Backen 65, 67 der Schweißzange von oben über den Haken 62 geführt und anschließend in Richtung der Pfeile 69, 71 an diesen herangeführt. Der Haken 62 wird mit Hilfe der Backen 65, 67 über der Leitung 63 zusammen gebogen und gleichzeitig durch einen durch die Backen 65, 67 fließenden Strom erhitzt. Durch diesen Strom wird der Draht 63 erhitzt, wobei seine Isolation abbrennt. Dabei wird die Leitung 63 mit dem Haken 62 verschweißt, und es entsteht eine mechanisch stabile und elektrisch gut leitfähige Verbindung. - Die Fig. 12 und 13 sind schematische Darstellungen, die den Ring 42 und die anderen Teile nur ganz grob andeuten, um das Arbeitsprinzip der Verschweißung in einfacher und verständlicher Weise darzustellen.

Auf den Haken 62 folgt ein Abschnitt 64 mit einer Länge von etwa 60° mech., an welchem die Stromschiene 44 einen rechteckförmigen Querschnitt ohne besondere Merkmale hat. Es folgt ein Abschnitt 66 mit einem Haken 68, und daran anschließend eine längliche Ausnehmung 70, wobei im Abschnitt 66 eine Einkerbung 72 vorgesehen ist.

Auf den Abschnitt 66 folgt eine Biegestelle 74, an der sich der Radius r1 des Abschnitts 64 auf einen etwas kleineren Radius r2 eines Abschnitts 78 verkleinert, der - wie der Abschnitt 64 - eine Winkelerstreckung von etwa 60° mech. hat. Der Abschnitt 78 erstreckt sich bis zu einer Biegestelle 80, wo sich der Radius r2 des Abschnitts 78 auf einen etwas kleineren Radius r3 verkleinert.

Die Biegestellen 74, 80 sind in entsprechenden komplementären Formhöhlungen B des Rings 33 geführt, die im unteren Teil von Fig. 6 dargestellt sind. Sie verhindern, dass die Ringe 44, 46, 48 anders als in vorgegebenen Positionen in den Ring 42 eingesetzt werden können.

In Fig. 5 folgt, bezogen auf den Uhrzeigersinn, auf die Biegestelle 80 ein Haken 82, und dann, mit einem Abstand von etwa 40° mech. vom Haken 82, ein von der Stromschiene 44 nach oben stehender Abschnitt 84 mit einer länglichen Ausnehmung 86, der auch hier eine Einkerbung 88 gegenüberliegt.

Im Uhrzeigersinn folgt auf den Abschnitt 84 erneut und mit einem Winkelabstand von etwa 45° mech. ein hochstehender Abschnitt 90, an dem zwei Haken 92, 94 vorgesehen sind. Dort endet die betreffende Stromschiene 44, 46 bzw. 48.

Die Haken 62, 68, 82, 92 und 94 ragen in das Innere der betreffenden Stromschiene 44, 46 oder 48. An diesen Haken wird beim automatisierten Wickeln der Wicklungsdraht 63 eingehängt und anschließend mit der betreffenden Stromschiene verschweißt, wobei durch die Hitze, die beim Schweißen entsteht, die Isolation des Drahtes 63 abgebrannt wird, so dass eine gute elektrische Verbindung entsteht.

Da die Stromschienen 44 (W), 46 (U) und 48 (V) gemäß Fig. 6 identisch sein können, werden ihre Elemente mit denselben Bezugszeichen bezeichnet wie in Fig. 5, aber indiziert mit U, V oder W, also z.B. 68U, 68V oder 68W, um die Darstellung nicht zu kompliziert zu machen.

Beim vorliegenden Ausführungsbeispiel wird die ganze Wicklung für alle Phasen aus einem einzigen, durchgehenden Drahtstück 63 gewickelt, dessen eines Ende 63A mit dem Haken 92W des Teils 90W elektrisch und mechanisch verbunden ist, dann alle zwölf Spulen 8', 9', 10', 11', 12', 1', 2', 3', 4', 5', 6' und 7' bis zu seinem anderen Ende 63B durchläuft. Das Ende 63B ist elektrisch und mechanisch mit dem Haken 94W des Teils 90W verbunden, so dass der Wicklungsdraht 63 bevorzugt in sich geschlossen ist.

Vom Haken 92W geht der Draht 63 zur Spule 8', und von dieser weiter zum Haken 62V.

Von dort geht er weiter zur Spule 9', und von dort weiter zum Haken 68U, und von dort weiter zur Spule 10'. Von dort geht der Draht 63 zum Haken 82W, und von dort zur Spule 11', und von dieser zum Haken 94V. (Der Haken 92V der Stromschiene 48 wird nicht benutzt und ist folglich redundant).

Vom Haken 94V geht der Draht 63 weiter zur Spule 12', und von dieser zum Haken 62U, und weiter zur Spule 1'. Von dieser geht der Draht 63 weiter zum Haken 68W, und von dort über die Spule 2' zum Haken 82V und weiter, über die Spule 3', zum Haken 94U. (Der Haken 92U wird bei dieser Stromschiene nicht benutzt).

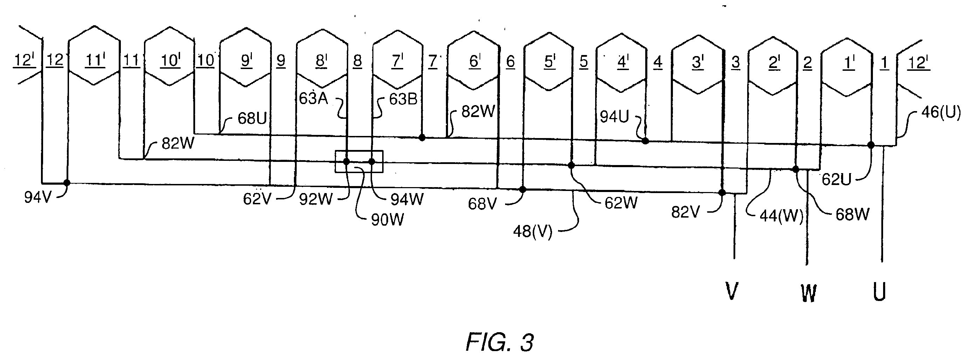

Vom Haken 94U geht die Wicklung über die Spule 4' zum Haken 62W, und von dort über die Spule 5' zum Haken 68V, und von dort weiter über die Spule 6' zum Haken 82W, und dann über die Spule 7' zum Drahtende 63B (Fig. 3) und zum Haken 94W.

Auf diese Weise kann die gesamte Wicklung maschinell gewickelt und auch maschinell mit den zugeordneten Haken verbunden werden.

Dabei ergibt sich die Schaltung gemäß Fig. 4, d.h. es handelt sich beim Beispiel um eine Vierfachparallel-Dreieckswicklung, die besonders für Antriebe mit Niederspannung geeignet ist. Z.B. sind zwischen den Anschlüssen V und W die vier Spulen 2', 5', 8' und 11' parallel geschaltet, und analog für die anderen Phasenanschlüsse, so, wie in Fig. 4 angegeben.

Da die Ströme in der Statorwicklungsanordnung 30 erheblich sein können, ist es wichtig, im gesamten Motor (oder Generator) Verbindungen mit niedrigem Widerstand zur Verfügung zu stellen.

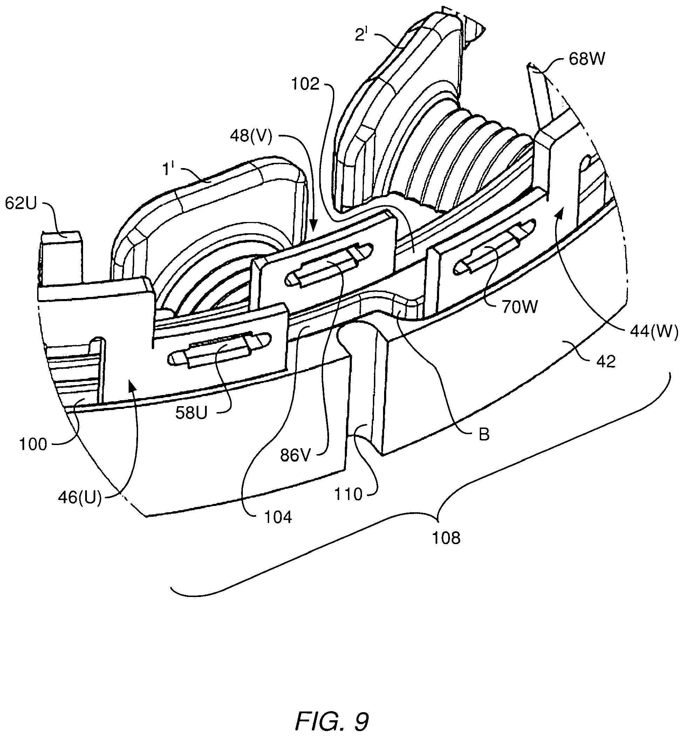

Fig. 9 zeigt eine perspektivische Darstellung eines Teils des oberen isolierenden Rings 42. Dieser hat eine Formhöhlung 100 zur Aufnahme der Stromschiene 46 (U), eine Formhöhlung 102 zur Aufnahme der Stromschiene 48 (V), und eine Formhöhlung 104 zur Aufnahme der Stromschiene 44 (W). Die Stromschienen werden in diese Formhöhlungen eingepresst und dort festgehalten. Wegen der Erhitzung, die beim Schweißen stattfindet, wird das Teil 42 bevorzugt durch Strahlung vernetzt, damit es diesen erhöhten Temperaturen standhalten kann.

In einem vorgegebenen Winkelbereich 108, der in den Fig. 1, 2 und 9 dargestellt ist, hat der isolierende Ring 42 eine Markierung 110, hier z.B. in Form einer Längsnut, und die drei Stromschienen 44, 46, 48 sind in diesem Bereich 108 durch spezielle Vorsprünge in Umfangsrichtung arretiert:
Ein Vorsprung 112 (Fig. 8) am Boden der Formhöhlung 102 arretiert die Stromschiene 48 (V) in Umfangsrichtung in der Formhöhlung 102, indem er formschlüssig in die Nut 88V der Stromschiene 48 eingreift. Dadurch wird die Stromschiene 48 im Winkelbereich 108 in Umfangsrichtung exakt fixiert, was sich für die weitere maschinelle Verarbeitung als sehr vorteilhaft erweist.

Ein Vorsprung 114 (Fig. 8) am Boden der Formhöhlung 104 arretiert die Stromschiene 44 (W) in Umfangsrichtung in der Formhöhlung 104, indem er in die Nut 72W der Stromschiene 44 (W) eingreift.

Ein Vorsprung 110 (Fig. 8) am Boden der Formhöhlung 100 arretiert die Stromschiene 46 (U) in der Formhöhlung 100, indem er in die Nut 60U (Fig. 8) der Stromschiene 46 (U) formschlüssig eingreift.

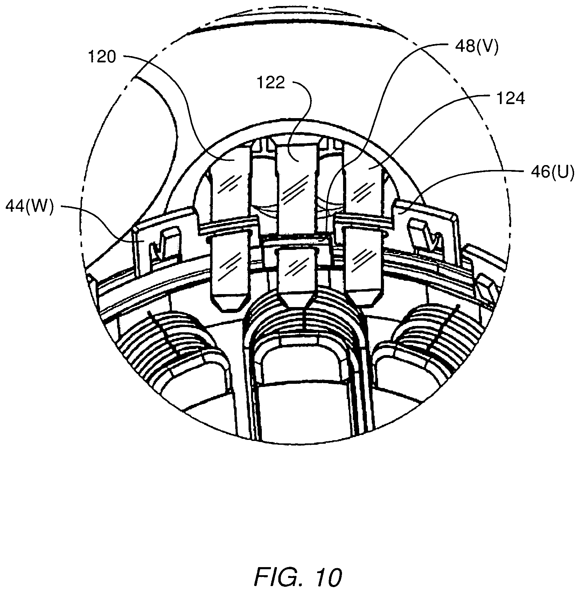

Auf diese Weise haben die länglichen Öffnungen 70W, 86V und 58U der Fig. 9 eine exakt definierte Lage relativ zueinander und zur Längsnut 110 (Fig. 9), so dass in diese länglichen Öffnungen gemäß Fig. 10 drei flache Leiter 120, 122, 124 von einem seitlichen Powerstecker 60 eingesteckt werden können, wie das Fig. 10 zeigt, und diese flachen Leiter 120, 122, 124 können dann, z.B. durch Laserschweißen, mit den Stromschienen 44, 46, 48 elektrisch und mechanisch verbunden werden, wie in Fig. 11 dargestellt.

Die flachen Leiter 120, 122, 124 sind im Powerstecker 60 durch Spritzguss befestigt, vgl. Fig. 11, und sie ermöglichen eine widerstandsarme Verbindung vom Stecker 60 zum Stator 30, und diese Verbindung kann weitgehend oder vollständig automatisiert hergestellt werden.

Der Powerstecker 60 wird mit einem zylindrischen Teil 130 in eine zylindrische Ausnehmung 132 eines Motorgehäuses 134 eingesetzt. Dieses Gehäuse 134 ist in Fig. 11 nur teilweise dargestellt. Ein O-Ring 136 ist in eine Ringnut 138 des zylindrischen Teils 130 eingesetzt und dient zur Abdichtung zwischen diesem und dem Motorgehäuse 134. Der Motorstecker 60 wird durch zwei Schrauben am Motorgehäuse 134 befestigt, von denen die Schraube 142 in Fig. 11 sichtbar ist.

Bei der Herstellung werden zunächst die drei Stromschienen 44, 46, 48 in die Formhöhlungen 100, 102, 104 eingepresst, um sie dort sicher festzuhalten und um im Winkelbereich 108 eine sehr exakte Positionierung dieser Stromschienen zu erreichen. Dann wird der Stator 30 bewickelt, gewöhnlich mit einer Wickelmaschine, und der Wicklungsdraht 63 wird mit den verschiedenen Haken, in die er eingehängt ist, so verschweißt, wie das in den Fig. 12 und 13 beispielhaft dargestellt ist.

Anschließend wird der Powerstecker 60 montiert, indem die flachen Leiterbahnen 120, 122, 124 seitlich in die länglichen Öffnungen 70U, 86V und 58W eingesteckt und dort verschweißt werden. Die (nicht dargestellten) Lagerschilde werden zusammen mit der Welle und dem Rotor 34 montiert. Diese Teile sind, da sie zur vorliegenden Erfindung keine direkte Beziehung haben, nur schematisch angedeutet.

Naturgemäß sind im Rahmen der vorliegenden Erfindung vielfache Abwandlungen und Modifikationen möglich.

## Patentansprüche

1. Elektronisch kommutierter Motor (32) mit einem Rotor (34), der um eine gedachte Achse (D) drehbar ist,
mit einer Statoranordnung (30), in welcher eine durch die Zahl drei oder ein ganzzahliges Vielfaches hiervon ganzzahlig teilbare Zahl von ausgeprägten Statorpolen vorgesehen ist, denen Spulen (1' bis 12') zugeordnet sind, welchen zu ihrem elektrischen Anschluss hochkant angeordnete Stromschienen (44, 46, 48) zugeordnet sind, die in einem Isolierteil (42) angeordnet sind,
**dadurch gekennzeichnet, dass**
die Stromschienen (44, 46, 48) jeweils einen zentralen Abschnitt (78) aufweisen, der in einem mittleren Abstand (r2) von der gedachten Achse (D) des Rotors (34) verläuft,
und welche einen ersten Endabschnitt (90) aufweisen, der in einem ersten Abstand (r3) von der gedachten Achse (D) verläuft, welcher erste Abstand (r3) kleiner ist als der mittlere Abstand (r2), welcher erste Abschnitt (90) über eine erste Umlenkstelle (80) in den zentralen Abschnitt (78) übergeht,
und welche einen zweiten Endabschnitt (64) aufweisen, der in einem zweiten Abstand (r1) von der Achse (D) verläuft, welcher zweite Abstand (r1) größer ist als der mittlere Abstand (r2) und über eine zweite Umlenkstelle (74) in den zentralen Abschnitt (78) übergeht,
welche Stromschienen (44, 46, 48) voneinander isoliert und ineinander geschachtelt sind, wobei sich in einem vorgegebenen Winkelbereich (108) der Statoranordnung (30) der zweite Endabschnitt (64) einer ersten Stromschiene (46) bis in die Nähe einer dort befindlichen zweiten Umlenkstelle (74) der zu diesem zweiten Endabschnitt (64) an dieser Stelle direkt benachbarten zweiten Stromschiene (44) erstreckt,
und die Möglichkeit einer Verschiebung der genannten Stromschienen (44, 46, 48) in Umfangsrichtung in diesem vorgegebenen Winkelbereich (108) der Statoranordnung (30) durch Vorsprünge (44, 46, 48) des Isolierteils (42), die formschlüssig in Nuten (72W, 60U, 88V) der genannten Stromschienen (44, 46, 48) eingreifen, mechanisch begrenzt ist.

2. Motor nach Anspruch 1, bei welchem in dem vorgegebenen Winkelbereich (108) jede der Stromschienen (44, 46, 48) mit einer Anschlussmöglichkeit (58U, 86V, 70 W) für einen in Richtung vom Motor (32) weg verlaufenden zugeordneten Anschlussleiter (120, 122, 124) versehen ist.

3. Motor nach Anspruch 2, bei welchem der Anschlussleiter (120, 122, 124) als Flachleiter ausgebildet ist,
und in der ihm zugeordneten Stromschiene (44, 46, 48) eine zu ihm komplementäre Ausnehmung zur Aufnahme dieses Flachleiters (120, 122, 124) vorgesehen ist.

4. Motor nach Anspruch 3, bei welchem zwischen einer Stromschiene (44, 46, 48) und dem ihr zugeordneten Flachleiter (120, 122, 124) eine Schweißverbindung vorgesehen ist.

5. Motor nach einem der vorhergehenden Ansprüche, bei welchem an jeder der Stromschienen (44, 46, 48) Haken (62, 68, 82, 92, 94) zum Einhängen von Elementen (63) der Statorwicklung vorgesehen sind.

6. Motor nach Anspruch 5, bei welchem der Abstand der Haken (62U, 68W), welche zum Einhängen von Elementen (63) der Statorwicklung für die Statorpole (12', 1', 2') des vorgegebenen Winkelbereichs (108) dienen, größer ist als dieser vorgesehene Winkelbereich (108).

## Claims

1. Electronically commutated motor (32) having a rotor (34) being rotatable around an imaginary axis (D),
having a stator arrangement (30) provided with a number of distinctive stator poles being integrally dividable by the number three or an integrally multiple thereof, said stator poles provided with coils (1' to 12'), said coils (1' to 12') provided with edgewise disposed conductor lines (44, 46, 48) disposed in an insulating part (42) to their conductor line,
**characterized in that**
the conductor lines (44, 46, 48) respectively having a central section (78) extending in a mean distance (r2) from the imaginary axis (D) of the rotor (34),
and having a first end section (90) extending in a first distance (r3) from the imaginary axis (D), said first distance (r3) being smaller than the mean distance (r2), said first section (90) merging into the central section (78) via a first deflection point (80),
and having a second end section (64) extending in a second distance (r1) from the axis (D), said second distance (r1) being larger than the mean distance (r2) and merging into the central section (78) via a second deflection point (74),
said conductor lines (44, 46, 48) being insulated from each other and interleaved, wherein, in a predetermined angle section (108) of the stator arrangement (108), the second end section (64) of a first conductor line (46) extending to the vicinity of a there located second deflection point (74) of the second conductor line (44) directly adjacent to the second end section (64) at this point,
and the capability of a displacement of said conductor lines (44, 46, 48) in the circumferential direction in said predetermined angle section (108) of the stator arrangement (30) through protrusions (44, 46, 48) of the insulating part (42) engaging positive in grooves (72W, 60U, 88V) of said conductor lines (44, 46, 48) is mechanically limited.

2. Motor according to claim 1, wherein in the predetermined angle section (108) each of the conductor lines (44, 46, 48) is provided with a connectivity (58U, 86V, 70 W) for a provided connecting lead (120, 122, 124) extending in a direction away from the motor (32).

3. Motor according to claim 2, wherein the connection lead (120, 122, 124) is formed as a flat conductor,
and in the conduction line (44, 46, 48) provided to said connection lead (120, 122, 124) a cavity complementary to said connection lead (120, 122, 124) for receiving said flat conductor (120, 122, 124) is provided.

4. Motor according to claim 3, wherein a welded connection is provided between a conductor line (44, 46, 48) and the flat conductor (120, 122, 124) provided to said conductor line (44, 46, 48).

5. Motor according to one of the preceding claims, wherein hooks (62, 68, 82, 92, 94) for hooking elements (63) of the stator winding are provided at each of said conductor lines (44, 46, 48).

6. Motor according to claim 5, wherein the distance of the hooks (62U, 68W) serving for hooking elements (63) of the stator winding for the stator poles (12', 1', 2') of the predetermined angle section (108) is larger than said predetermined angle section (108).

## Revendications

1. Moteur à commutation électronique (32) avec un rotor (34), qui est rotatif autour d'un axe imaginaire (D),
avec un ensemble stator (30), dans lequel un nombre divisible entier par trois ou par un multiple entier de celui-ci de pôles de stator marqués est prévu, auxquels des bobines (1' à 12') sont associées, auxquelles des rails conducteurs (44, 46, 48) agencés debout par rapport à leur raccord électrique sont associés, qui sont agencés dans un élément isolant (42),
**caractérisé en ce que**
les rails électriques (44, 46, 48) présentent respectivement une section centrale (78), qui s'étend à une distance moyenne (r2) de l'axe imaginaire (D) du rotor (34),
et qui présentent une première section d'extrémité (90), qui s'étend à une première distance (r3) de l'axe imaginaire (D), laquelle première distance (r3) est inférieure à la distance moyenne (r2), laquelle première section (90) passe à la section centrale (78) par le biais d'un premier point de renvoi (80),
et qui présentent une deuxième section d'extrémité (64), qui s'étend à une deuxième distance (r1) de l'axe (D), laquelle deuxième distance (r1) est supérieure à la distance moyenne (r2) et passe à la section centrale (78) par le biais d'un deuxième point de renvoi (74),
lesquels rails électriques (44, 46, 48) sont isolés l'un de l'autre et imbriqués l'un dans l'autre, dans lequel la deuxième section d'extrémité (64) d'un premier rail électrique (46) s'étend dans une plage angulaire prédéfinie (108) de l'ensemble stator (30) jusqu'à proximité d'un deuxième point de renvoi (74) s'y trouvant du deuxième rail électrique (44) directement adjacent à cette deuxième section d'extrémité (64) à ce point,
et la possibilité d'un déplacement desdits rails électriques (44, 46, 48) dans la direction circonférentielle dans cette plage angulaire prédéfinie (108) de l'ensemble stator (30) est limitée mécaniquement par des saillies (44, 46, 48) de l'élément isolant (42), qui entrent en prise par correspondance de forme dans des rainures (72W, 60U, 88V) desdits rails électriques (44, 46, 48).

2. Moteur selon la revendication 1, dans lequel dans la plage angulaire prédéfinie (108) chacun des rails électriques (44, 46, 48) est pourvu d'une possibilité de raccordement (58U, 86V, 70W) pour un conducteur de raccordement (120, 122, 124) associé dans la direction s'éloignant du moteur (32).

3. Moteur selon la revendication 2, dans lequel le conducteur de raccordement (120, 122, 124) est réalisé en tant que conducteur plat,
et dans le rail électrique (44, 46, 48) qui lui est associé, un évidement complémentaire à celui-ci est prévu pour la réception de ce conducteur plat (120, 122, 124).

4. Moteur selon la revendication 3, dans lequel une liaison soudée est prévue entre un rail électrique (44, 46, 48) et le conducteur plat qui lui associé (120, 122, 124).

5. Moteur selon l'une quelconque des revendications précédentes, dans lequel des crochets (62, 68, 82, 92, 94) sont prévus au niveau de chacun des rails électriques (44, 46, 48) pour l'accrochage d'éléments (63) de l'enroulement de stator.

6. Moteur selon la revendication 5, dans lequel la distance des crochets (62U, 68W), qui servent à accrocher des éléments (63) de l'enroulement de stator pour les pôles de stator (12', 1', 2') de la plage angulaire prédéfinie (108), est supérieure à cette plage angulaire prévue (108).
